# EUROPEAN PATENT APPLICATION

(11) **EP 4 810 326 A1**
(43) Date of publication of application: **23.09.2026**
(21) Application number: 25858332.7
(22) Date of filing: 02.04.2025
(51) Int. Cl.: B60R 16/023, H04N 21/44, H04N 21/45, B60Q 3/74, B60Q 3/80, B60N 2/02

(54) **ARTIFICIAL-INTELLIGENCE-BASED METHOD AND SYSTEM FOR CREATING MOVIE VIEWING AMBIENCE IN AUTOMOTIVE CABIN**

(30) Priority: 30.08.2024 CN 202411212612
(71) Applicant: Chery Automobile Co., Ltd., Wuhu, Anhui 241006 (CN)
(72) Inventor: JI, Qiangqiang, Wuhu, Anhui 241006 (CN); XIE, Tongping, Wuhu, Anhui 241006 (CN); BAO, Fangbei, Wuhu, Anhui 241006 (CN)
(74) Representative: Adamson Jones
(86) International application number: PCT/CN2025/086982
(87) International publication number: WO 2026/045281

(57) **Abstract**

An artificial-intelligence (Al)-based method and system for creating movie viewing ambience in an automotive cabin. The method comprises: an AI content recognition and analysis module automatically analyzing movie content to be viewed that is selected by a user, in order to obtain a content recognition result of said movie content, wherein the content recognition result is used for indicating a movie genre, scenes and an emotional tone of said movie content; on the basis of the content recognition result, an AI generative module generating a corresponding ambience rendering mode for all screens and lighting systems in an automotive cabin; on the basis of the movie genre and the scenes, an AI audio effect control module adjusting an audio effect of an audio system, wherein the audio effect is synchronized with the ambience rendering mode; and a user feedback module collecting feedback data of the user in real time, and dynamically adjusting the ambience rendering mode on the basis of the feedback data. By using artificial intelligence technology, the method can realize the ambience rendering in which multiple screens and lighting systems in an automotive cabin are synchronized with movie content that is being viewed, thereby providing users with personalized and immersive movie viewing experience.

## Description

This application is based upon and claims priority to Chinese Patent Application No. 202411212612.7, filed on August 30, 2024, and entitled " ARTIFICIAL-INTELLIGENCE-BASED METHOD AND SYSTEM FOR CREATING VIEWING ATMOSPHERE IN VEHICLE CABIN," the entire contents of which are incorporated herein by reference.

### TECHNICAL FIELD

The present disclosure relates to the field of smart vehicle technology, and in particular, relates to an artificial intelligence (AI)-based method and system for creating a viewing atmosphere in a vehicle cabin.

### BACKGROUND

With the development of automotive technology, modern vehicle cabins are equipped with a variety of screens and lighting systems, such as a center console display, an instrument cluster display, an additional display, a rear-seat display, a roof-mounted display, interior ambient lights, and exterior headlights. However, these devices typically operate independently and lack an atmosphere rendering capability synchronized with viewing content.

### SUMMARY

In view of the aforementioned deficiencies in the related art, the present disclosure proposes an AI-based method and system for creating a viewing atmosphere in a vehicle cabin, so as to solve the problems described in the background.

To achieve the above objective, the present disclosure employs the following technical solutions.

In one aspect, some embodiments of the present disclosure provide an AI-based method for creating a viewing atmosphere in a vehicle cabin, performed by a computer device. The method includes:
automatically analyzing, by an AI content recognition and analysis module, viewing content selected by a user to obtain a content recognition result of the viewing content, wherein the content recognition result is used to indicate a movie type, a scene, and an emotional tone of the viewing content;
generating, by an AI generative module, a corresponding atmosphere rendering mode for all screens and lighting systems in the vehicle cabin according to the content recognition result, wherein the atmosphere rendering mode includes one or more of: light flashing simulation in a lightning and thunder scene, ambient lighting change in a horror scene, or soft lighting adjustment in a romantic scene;
adjusting, by an AI sound effect control module, a sound effect of a sound system according to the movie type and the scene, wherein the sound effect is synchronized with the atmosphere rendering mode; and
collecting in real time, by a user feedback module, feedback data of the user, and dynamically adjusting the atmosphere rendering mode according to the feedback data.

In some embodiments, automatically analyzing, by the AI content recognition and analysis module, the viewing content selected by the user to obtain the content recognition result of the viewing content includes:
receiving viewing content information and video stream data input by the user, wherein the viewing content information includes a movie name, a genre, a director, and an actor; and
performing, using a deep learning algorithm, an emotion analysis and an atmosphere analysis on the viewing content information and the video stream data to obtain a content analysis result, wherein the content analysis result includes an emotion analysis result and an atmosphere analysis result, the emotion analysis being used to recognize the emotional tone of the viewing content, and the atmosphere analysis being used to recognize a theme of the viewing content and time frame data of key scenes in the viewing content.

In some embodiments, generating, by the AI generative module, the corresponding atmosphere rendering mode for all the screens and lighting systems in the vehicle cabin according to the content recognition result includes:
generating, by the AI generative module, a visual effect matching a theme of the viewing content according to the content analysis result, wherein the visual effect is used to indicate the atmosphere rendering mode, and the visual effect includes a color scheme, a dynamic pattern, and a transition effect;
configuring other screens in the vehicle cabin according to the visual effect to obtain display content of the other screens; and
controlling the lighting systems in the vehicle cabin according to the visual effect, and adjusting a color and a brightness of lights according to the color scheme.

In some embodiments, adjusting, by the AI sound effect control module, the sound effect of the sound system according to the movie type and the scene, wherein the sound effect is synchronized with the atmosphere rendering mode, includes:
monitoring in real time a key scene change in a movie, and preliminarily adjusting the sound effect of the sound system according to the key scene change, wherein the key scene change includes at least one of: a combat change, a pursuit change, or a romantic change;
re-adjusting the sound effect of the sound system using a multi-channel surround sound technology, wherein the multi-channel surround sound technology is used to simulate propagation of sound in a three-dimensional space to obtain a stereoscopic and realistic auditory experience; and
performing sound positioning and balance adjustment on the sound effect of the sound system according to a seat position of the user and acoustic characteristics of the vehicle cabin, wherein the sound positioning and balance adjustment are used to ensure that each seat obtains an optimal auditory effect.

In some embodiments, collecting in real time, by the user feedback module, the feedback data of the user, and dynamically adjusting the atmosphere rendering mode according to the feedback data includes:
monitoring physiological data of the user by a sensor, wherein the physiological data includes heart rate, respiratory rate, and skin conductance, and the physiological data is used to evaluate an emotional state and a stress level of the user;
capturing behavioral data of the user using a camera or a motion tracking technology, wherein the behavioral data includes a head position, a body position, a posture change, and a gesture action of the user;
analyzing a micro-expression of the user using a facial expression recognition technology, wherein the micro-expression is used to indicate a satisfaction degree and an emotional feedback of the user to a current atmosphere;
analyzing an intonation change in a voice command of the user using an integrated voice recognition system, wherein the intonation change is used to indicate an intention and an emotion of the user; and
inputting the collected physiological data, behavioral data, micro-expression, and intonation change into an AI algorithm, analyzing in real time a viewing experience of the user using the AI algorithm, and dynamically adjusting the atmosphere rendering mode according to an analysis result of the viewing experience.

In another aspect, some embodiments of the present disclosure provide an AI-based in-vehicle system for creating a viewing atmosphere in a vehicle cabin. The system includes:
an AI content recognition and analysis module, configured to automatically analyze and recognize viewing content to obtain a content recognition result of the viewing content, wherein the content recognition result is used to indicate a movie type, a scene, and an emotional tone of the viewing content;
an AI generative module, configured to generate a corresponding atmosphere rendering mode for all screens and lighting systems in the vehicle cabin according to the content recognition result, wherein the atmosphere rendering mode includes one or more of: light flashing simulation in a lightning and thunder scene, ambient lighting change in a horror scene, or soft lighting adjustment in a romantic scene;
an AI sound effect control module, configured to adjust a sound effect of a sound system according to the movie type and the scene, wherein the sound effect is synchronized with the atmosphere rendering mode; and
a user feedback module, configured to collect in real time feedback data of the user, and dynamically adjust the atmosphere rendering mode according to the feedback data.

In some embodiments, the AI content recognition and analysis module is configured to:
receive viewing content information and video stream data input by the user, wherein the viewing content information includes a movie name, a genre, a director, and an actor; and
perform, using a deep learning algorithm, an emotion analysis and an atmosphere analysis on the viewing content information and the video stream data to obtain a content analysis result, wherein the content analysis result includes an emotion analysis result and an atmosphere analysis result, the emotion analysis being used to recognize the emotional tone of the viewing content, and the atmosphere analysis being used to recognize a theme of the viewing content and time frame data of key scenes in the viewing content.

In some embodiments, the AI generative module is configured to:
generate, by the AI generative module, a visual effect matching a theme of the viewing content according to the content analysis result, wherein the visual effect is used to indicate the atmosphere rendering mode, and the visual effect includes a color scheme, a dynamic pattern, and a transition effect;
configure other screens in the vehicle cabin according to the visual effect to obtain display content of the other screens; and
control the lighting systems in the vehicle cabin according to the visual effect, and adjusting a color and a brightness of lights according to the color scheme.

In some embodiments, the AI sound effect control module is configured to:
monitor in real time a key scene change in a movie, and preliminarily adjust the sound effect of the sound system according to the key scene change, wherein the key scene change includes at least one of: a combat change, a pursuit change, or a romantic change;
re-adjust the sound effect of the sound system using a multi-channel surround sound technology, wherein the multi-channel surround sound technology is used to simulate propagation of sound in a three-dimensional space to obtain a stereoscopic and realistic auditory experience; and
perform sound positioning and balance adjustment on the sound effect of the sound system according to a seat position of the user and acoustic characteristics of the vehicle cabin, wherein the sound positioning and balance adjustment are used to ensure that each seat obtains an optimal auditory effect.

In some embodiments, the user feedback module is configured to:
monitor physiological data of the user by a sensor, wherein the physiological data includes heart rate, respiratory rate, and skin conductance, and the physiological data is used to evaluate an emotional state and a stress level of the user;
capture behavioral data of the user using a camera or a motion tracking technology, wherein the behavioral data includes a head position, a body position, a posture change, and a gesture action of the user;
analyze a micro-expression of the user using a facial expression recognition technology, wherein the micro-expression is used to indicate a satisfaction degree and an emotional feedback of the user to a current atmosphere;
analyze an intonation change in a voice command of the user using an integrated voice recognition system, wherein the intonation change is used to indicate an intention and an emotion of the user; and
input the collected physiological data, behavioral data, micro-expression, and intonation change into an AI algorithm, analyze in real time a viewing experience of the user using the AI algorithm, and dynamically adjust the atmosphere rendering mode according to an analysis result of the viewing experience.

The present disclosure at least achieves the following beneficial effects:
According to the present disclosure, an atmosphere rendering mode matching a content recognition result of viewing content selected by a user may be determined using the AI technology, thereby achieving atmosphere rendering of multiple screens and lighting systems in the vehicle cabin synchronized with the viewing content. Moreover, the atmosphere rendering mode may be dynamically adjusted according to feedback data of the user regarding a current atmosphere rendering mode, thereby providing the user with a more personalized and immersive viewing experience.

### BRIEF DESCRIPTION OF DRAWINGS

The accompanying drawings herein, which are incorporated herein and constitute a part of the specification, illustrate several exemplary embodiments of the present disclosure and together with the description, serve to illustrate the present disclosure, construing no limitation to the present disclosure. In the drawings:
FIG. 1 is a flowchart of a method according to the present disclosure;
FIG. 2 is a schematic block diagram of an AI content recognition and analysis module according to the present disclosure;
FIG. 3 is a schematic block diagram of an AI generative module according to the present disclosure;
FIG. 4 is a schematic block diagram of an AI sound effect control module according to the present disclosure; and
FIG. 5 is a schematic block diagram of a user feedback module according to the present disclosure.

### DETAILED DESCRIPTION

The present disclosure is described hereinafter in detail with reference to the accompanying drawings and specific embodiments. It should be noted that in cases of no conflict, the embodiments and features in the embodiments of the present invention may be combined together.

The detailed descriptions hereinafter are exemplary and illustrative, and are intended to further illustrate the present disclosure. Unless otherwise specified, all technical terms used in the present disclosure have the same meaning as commonly understood by a person of ordinary skill in the art to which the present disclosure belongs. The terms used herein are only intended to describe the specific embodiments, instead of causing any limitation to the exemplary embodiments of the present disclosure.

### Embodiment 1

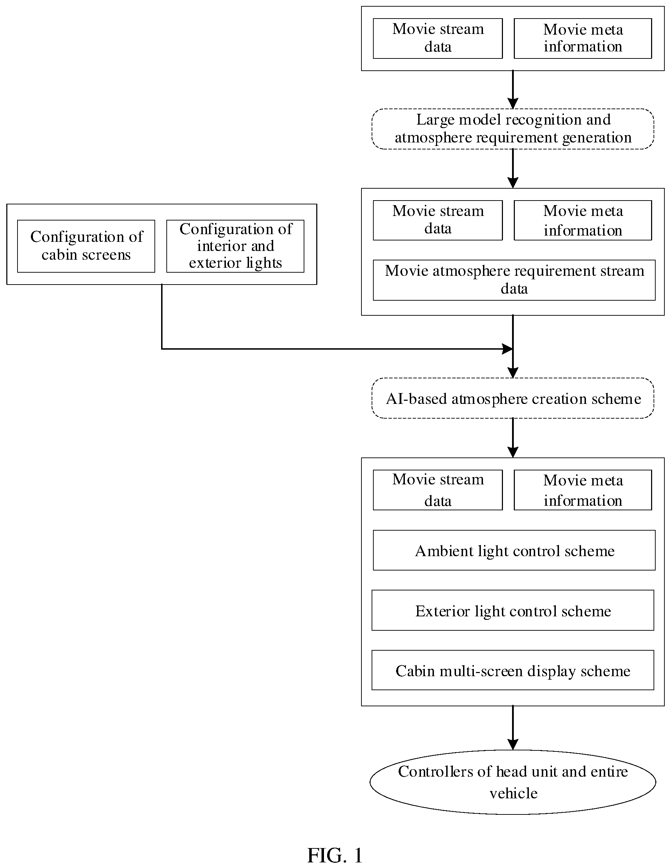

As illustrated in FIG. 1 to FIG. 5, the present disclosure provides an AI-based in-vehicle system for creating a viewing atmosphere in a vehicle cabin. The method includes:
automatically analyzing, by an AI content recognition and analysis module, viewing content selected by a user to obtain a content recognition result of the viewing content, wherein the content recognition result is used to indicate a movie type, a scene, and an emotional tone of the viewing content;
generating, by an AI generative module, a corresponding atmosphere rendering mode for all screens and lighting systems in the vehicle cabin according to the content recognition result, wherein the atmosphere rendering mode includes one or more of: light flashing simulation in a lightning and thunder scene, ambient lighting change in a horror scene, or soft lighting adjustment in a romantic scene;
adjusting, by an AI sound effect control module, a sound effect of a sound system according to the movie type and the scene, wherein the sound effect is synchronized with the atmosphere rendering mode; and
collecting in real time, by a user feedback module, feedback data of the user, and dynamically adjusting the atmosphere rendering mode according to the feedback data.

According to the present disclosure, an atmosphere rendering mode matching a content recognition result of viewing content selected by a user may be determined using the AI technology, thereby achieving atmosphere rendering of multiple screens and lighting systems in the vehicle cabin synchronized with the viewing content. Moreover, the atmosphere rendering mode may be dynamically adjusted according to feedback data of the user regarding a current atmosphere rendering mode, thereby providing the user with a more personalized and immersive viewing experience.

As illustrated in FIG. 1, movie stream data and movie meta information are input into a large model to perform recognition and atmosphere requirement generation, to obtain movie atmosphere requirement stream data. Then, cabin screens and interior and exterior lights are configured according to the movie stream data, the movie meta information, and the movie atmosphere requirement stream data, and an atmosphere creation scheme is generated using an AI technology. The atmosphere creation scheme includes an ambient light control scheme, an exterior light control scheme, and a cabin multi-screen display scheme. Controllers of a head unit and an entire vehicle are adjusted according to the movie stream data, the movie meta information, and the atmosphere creation scheme, to create a viewing atmosphere corresponding to the viewing content.

In some embodiments, viewing content information and video stream data input by the user are received, wherein the viewing content information includes a movie name, a genre, a director, and an actor; and An emotion analysis and an atmosphere analysis are performed, using a deep learning algorithm, on the viewing content information and the video stream data to obtain a content analysis result, wherein the content analysis result includes an emotion analysis result and an atmosphere analysis result, the emotion analysis being used to recognize the emotional tone of the viewing content, and the atmosphere analysis being used to recognize a theme of the viewing content and time frame data of key scenes in the viewing content.

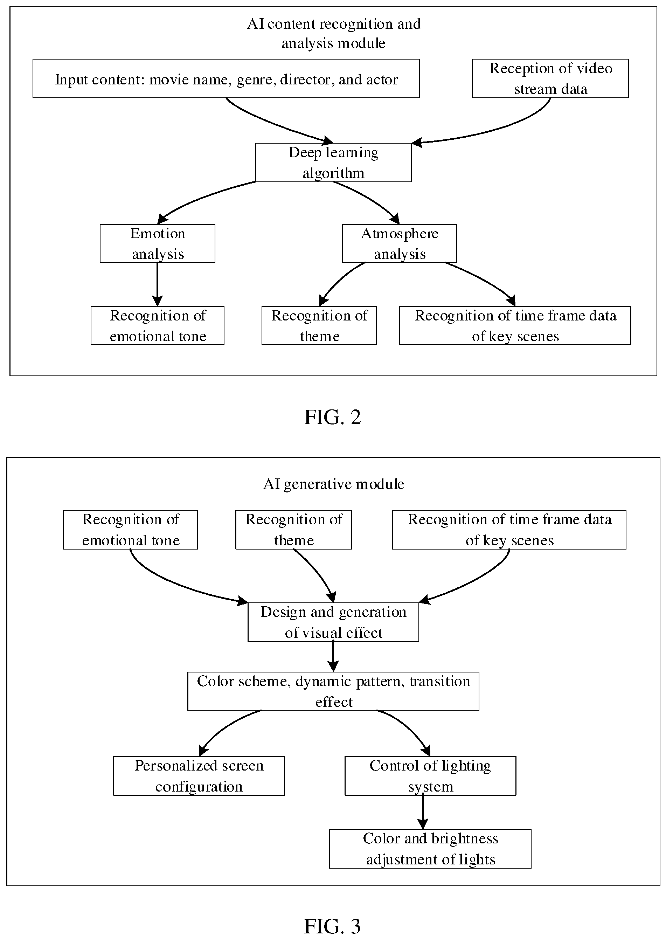

As illustrated in FIG. 2, viewing content information and video stream data are input into an AI content recognition and analysis module. An emotion analysis is performed on the viewing content information and the video stream data using a deep learning algorithm to obtain an emotion analysis result, and an atmosphere analysis is performed on the viewing content information and the video stream data using the deep learning algorithm to obtain an atmosphere analysis result. By performing the emotion analysis and the atmosphere analysis on the viewing content, an emotional tone of the viewing content, a theme of the viewing content, and time frame data of key scenes in the viewing content are obtained, which provides a sufficient reference basis for determining the atmosphere rendering mode, and improves a matching degree between the atmosphere rendering mode and the viewing content.

In some embodiments, a visual effect matching a theme of the viewing content is generated by the AI generative module according to the content analysis result, wherein the visual effect is used to indicate the atmosphere rendering mode, and the visual effect includes a color scheme, a dynamic pattern, and a transition effect. Other screens in the vehicle cabin are configured according to the visual effect to obtain display content of the other screens. The lighting systems in the vehicle cabin are controlled according to the visual effect, and a color and a brightness of lights are adjusted according to the color scheme.

As illustrated in FIG. 3, the obtained emotion analysis result and atmosphere analysis result are input into the AI generative module to generate a visual effect matching the theme of the viewing content. According to the visual effect, personalized configuration is performed on the screens in the vehicle cabin, display content of the screens is adjusted according to characteristics of the viewing content, and a color and a brightness of lights are adjusted according to the atmosphere rendering mode. By using the above scheme for generating the atmosphere rendering mode, atmosphere rendering of the multiple screens and lighting systems in the vehicle cabin synchronized with the viewing content is achieved. This satisfies the creation of the viewing atmosphere in the vehicle cabin, creates an immersive viewing environment for the user, and helps improve user satisfaction.

In some embodiments, a key scene change in a movie is monitored in real time, and the sound effect of the sound system is preliminarily adjusted according to the key scene change, wherein the key scene change includes at least one of: a combat change, a pursuit change, or a romantic change. The sound effect of the sound system is re-adjusted using a multi-channel surround sound technology, wherein the multi-channel surround sound technology is used to simulate propagation of sound in a three-dimensional space to obtain a stereoscopic and realistic auditory experience. Sound positioning and balance adjustment are performed on the sound effect of the sound system according to a seat position of the user and acoustic characteristics of the vehicle cabin, wherein the sound positioning and balance adjustment are used to ensure that each seat obtains an optimal auditory effect.

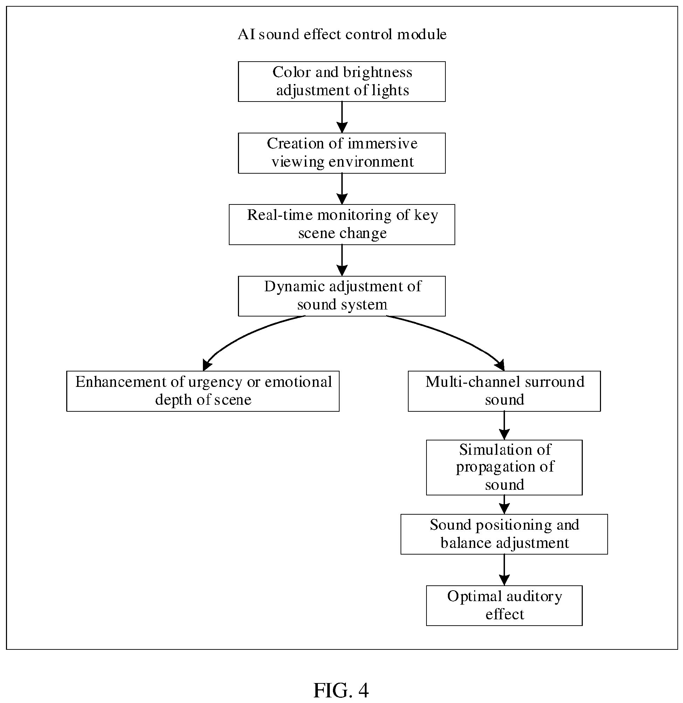

As illustrated in FIG. 4, in a case where the immersive viewing environment is created, a key scene change in the movie is monitored in real time, and the sound system is dynamically adjusted. Using the multi-channel surround sound technology, propagation of sound in a three-dimensional space is simulated to provide a more stereoscopic and realistic auditory experience. Then, sound positioning and balance adjustment are performed according to a seat position of the user and acoustic characteristics of the vehicle cabin, ensuring that each seat achieves an optimal auditory effect.

In some embodiments, physiological data of the user is monitored by a sensor, wherein the physiological data includes heart rate, respiratory rate, and skin conductance, and the physiological data is used to evaluate an emotional state and a stress level of the user. Behavioral data of the user is captured using a camera or a motion tracking technology, wherein the behavioral data includes a head position, a body position, a posture change, and a gesture action of the user. A micro-expression of the user is analyzed using a facial expression recognition technology, wherein the micro-expression is used to indicate a satisfaction degree and an emotional feedback of the user to a current atmosphere. An intonation change in a voice command of the user is analyzed using an integrated voice recognition system, wherein the intonation change is used to indicate an intention and an emotion of the user. The collected physiological data, behavioral data, micro-expression, and intonation change are input into an AI algorithm, a viewing experience of the user is analyzed in real time using the AI algorithm, and the atmosphere rendering mode is dynamically adjusted according to an analysis result of the viewing experience.

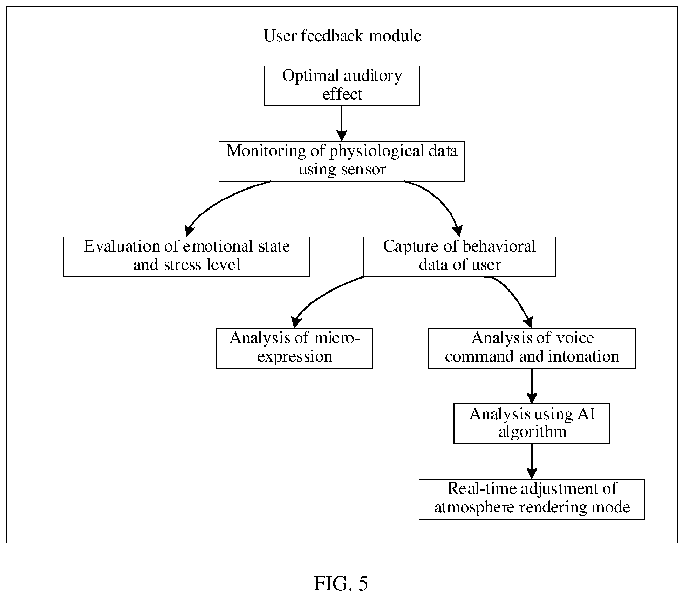

As illustrated in FIG. 5, a sensor may be deployed on the user, and physiological data of the user is monitored using the sensor to evaluate an emotional state and a stress level of the user. Then, behavioral data of the user is captured using a camera or a motion tracking technology, including a head and body position, a posture change, and a gesture action. A micro-expression of the user is analyzed using a facial expression recognition technology to obtain a satisfaction degree and an emotional feedback of the user to a current atmosphere, and a voice command and an intonation change of the user are analyzed using an integrated voice recognition system to recognize an intention and an emotion of the user. Finally, the collected data is input into an AI algorithm to analyze a viewing experience of the user in real time, and the atmosphere rendering mode is adjusted according to an analysis result. This allows the atmosphere rendering mode to be correspondingly adjusted according to a change in the user's needs, makes the viewing atmosphere in the vehicle cabin more in line with a current emotional feedback of the user, provides the user with a more personalized and immersive viewing experience, and improves user satisfaction with the creation of the viewing atmosphere.

### Embodiment 2

As illustrated in FIG. 1 to FIG. 5, the present disclosure further provides an AI-based in-vehicle system for creating a viewing atmosphere in a vehicle cabin. The system includes:
an AI content recognition and analysis module, configured to automatically analyze and recognize viewing content to obtain a content recognition result of the viewing content, wherein the content recognition result is used to indicate a movie type, a scene, and an emotional tone of the viewing content;
an AI generative module, configured to generate a corresponding atmosphere rendering mode for all screens and lighting systems in the vehicle cabin according to the content recognition result, wherein the atmosphere rendering mode includes one or more of: light flashing simulation in a lightning and thunder scene, ambient lighting change in a horror scene, or soft lighting adjustment in a romantic scene;
an AI sound effect control module, configured to adjust a sound effect of a sound system according to the movie type and the scene, wherein the sound effect is synchronized with the atmosphere rendering mode; and
a user feedback module, configured to collect in real time feedback data of the user, and dynamically adjust the atmosphere rendering mode according to the feedback data.

In some embodiments, the AI content recognition and analysis module is configured to receive viewing content information and video stream data input by the user, wherein the viewing content information includes a movie name, a genre, a director, and an actor; and perform, using a deep learning algorithm, an emotion analysis and an atmosphere analysis on the viewing content information to obtain a content analysis result, wherein the content analysis result includes an emotion analysis result and an atmosphere analysis result, the emotion analysis being used to recognize the emotional tone of the viewing content, and the atmosphere analysis being used to recognize a theme of the viewing content and time frame data of key scenes in the viewing content.

In some embodiments, the AI generative module is configured to: generate a visual effect matching the theme of the viewing content according to the content analysis result, wherein the visual effect is used to indicate the atmosphere rendering mode, and the visual effect includes a color scheme, a dynamic pattern, and a transition effect; configure other screens in the vehicle cabin according to the visual effect to obtain display content of the other screens; and control the lighting systems in the vehicle cabin according to the visual effect, and adjust a color and a brightness of lights according to the color scheme.

In some embodiments, the AI sound effect control module is configured to: monitor in real time a key scene change in the movie, and preliminarily adjust the sound effect of the sound system according to the key scene change, wherein the key scene change includes at least one of: a combat change, a pursuit change, or a romantic change; re-adjust the sound effect of the sound system using a multi-channel surround sound technology, wherein the multi-channel surround sound technology is used to simulate propagation of sound in a three-dimensional space to obtain a stereoscopic and realistic auditory experience; and perform sound positioning and balance adjustment on the sound effect of the sound system according to a seat position of the user and acoustic characteristics of the vehicle cabin, wherein the sound positioning and balance adjustment are used to ensure that each seat obtains an optimal auditory effect.

In some embodiments, the user feedback module is configured to: monitor physiological data of the user using a sensor, wherein the physiological data includes heart rate, respiratory rate, and skin conductance, and the physiological data is used to evaluate an emotional state and a stress level of the user; capture behavioral data of the user using a camera or a motion tracking technology, wherein the behavioral data includes a head position, a body position, a posture change, and a gesture action of the user; analyze a micro-expression of the user using a facial expression recognition technology, wherein the micro-expression is used to indicate a satisfaction degree and an emotional feedback of the user to a current atmosphere; analyze an intonation change in a voice command of the user using an integrated voice recognition system, wherein the intonation change is used to indicate an intention and an emotion of the user; and input the collected physiological data, behavioral data, micro-expression, and intonation change into an AI algorithm, analyze in real time a viewing experience of the user using the AI algorithm, and dynamically adjust the atmosphere rendering mode according to an analysis result of the viewing experience.

### Embodiment 3

A specific implementation process of the present disclosure includes the following processes.
1. The user selects a movie to be watched via a central control system of the vehicle.
2. The AI content recognition and analysis module receives movie information and analyzes characteristics of the movie using a deep learning algorithm. The module receives viewing content information and video stream data input by the user, including but not limited to a movie name, a genre, a director, an actor, and the video stream data. Then, an emotion analysis and an atmosphere analysis are performed on the content using the deep learning algorithm to recognize a theme, an emotional tone, and time frame data of key scenes thereof.
3. The AI generative module generates, according to a recognition result, a rendering mode adapting to a movie atmosphere for a center console display, an instrument cluster display, an additional display, a rear-seat display, a roof-mounted display, exterior headlights, and the like. Based on an analysis result, the AI generative module designs and generates a visual effect matching a content theme, including a color scheme, a dynamic pattern, and a transition effect. Personalized configuration is performed on other screens in the cabin, and the display content of the screens is adjusted according to characteristics of the viewing content. Moreover, the lighting systems in the cabin are controlled according to a scheme, and a color and a brightness of lights are adjusted according to the atmosphere rendering mode, so as to create an immersive viewing environment. For example, in a lightning and thunder scene, the exterior headlights and an interior lighting system simulate a lightning effect and flash rapidly; in a horror scene, the color and the brightness of the lights change to create a tense atmosphere.

The AI sound effect control module intelligently adjusts a setting of the sound system according to audio characteristics of the movie, and synchronizes the setting with the light rendering mode to enhance immersion of viewing. A key scene change in the movie, such as a combat, a pursuit, or a romance, is monitored in real time, and the sound system is dynamically adjusted to enhance urgency or emotional depth of a scene. A multi-channel surround sound technology is used to simulate propagation of sound in a three-dimensional space, providing a more stereoscopic and realistic auditory experience. Sound positioning and balance adjustment are performed according to a seat position of the user and acoustic characteristics of the cabin, ensuring that each seat obtains an optimal auditory effect.

The user feedback module monitors physiological reactions and operational behaviors of the user using sensors, collects feedback data in real time, and dynamically adjusts the atmosphere rendering mode according to the feedback. Sensors are deployed to monitor physiological data of the user, such as heart rate, respiratory rate, and skin conductance, to evaluate an emotional state and a stress level of the user. Behavioral data of the user is captured using a camera or a motion tracking technology, including a head and body position, a posture change, and a gesture action. A micro-expression of the user is analyzed using a facial expression recognition technology to obtain a satisfaction degree and an emotional feedback of the user to a current atmosphere. A voice command and an intonation change of the user are analyzed using an integrated voice recognition system to recognize an intention and an emotion of the user. The collected physiological and behavioral data is input into an AI algorithm to analyze a viewing experience of the user in real time, and the atmosphere rendering mode is adjusted according to an analysis result.

Through the above embodiments, the present disclosure achieves, using the AI technology, atmosphere rendering of multiple screens and lighting systems in a vehicle cabin synchronized with viewing content, thereby providing the user with a personalized and immersive viewing experience.

Detailed above are merely exemplary embodiments for the purpose of illustrating the present disclosure. It should be noted that persons of ordinary skill in the art would derive various modifications or variations based on the inventive concept of the present disclosure without paying any creative effort. Therefore, all possible technical solutions reached by a person skilled in the art by means of logical analysis, reasoning, or limited experiments or trials based on the inventive concept of the present disclosure and the related art shall fall within the protection scope defined by the appended claims.

## Claims

1. An artificial intelligence (AI)-based method for creating a viewing atmosphere in a vehicle cabin, performed by a computer device, the method comprising:
automatically analyzing, by an AI content recognition and analysis module, viewing content selected by a user to obtain a content recognition result of the viewing content, wherein the content recognition result indicates a movie type, a scene, and an emotional tone of the viewing content;
generating, by an AI generative module, a corresponding atmosphere rendering mode for all screens and lighting systems in the vehicle cabin according to the content recognition result, wherein the atmosphere rendering mode comprises one or more of light flashing simulation in a lightning and thunder scene, ambient lighting change in a horror scene, or soft lighting adjustment in a romantic scene;
adjusting, by an AI sound effect control module, a sound effect of a sound system according to the movie type and the scene, wherein the sound effect is synchronized with the atmosphere rendering mode; and
collecting in real time, by a user feedback module, feedback data of the user, and dynamically adjusting the atmosphere rendering mode according to the feedback data.

2. The method according to claim 1, wherein the automatically analyzing, by the AI content recognition and analysis module, the viewing content selected by the user to obtain the content recognition result of the viewing content comprises:
receiving viewing content information and video stream data input by the user, wherein the viewing content information comprises a movie name, a genre, a director, and an actor; and
performing, using a deep learning algorithm, an emotion analysis and an atmosphere analysis on the viewing content information and the video stream data to obtain a content analysis result, wherein the content analysis result comprises an emotion analysis result and an atmosphere analysis result, the emotion analysis being configured to recognize the emotional tone of the viewing content, and the atmosphere analysis being configured to recognize a theme of the viewing content and time frame data of key scenes in the viewing content.

3. The method according to claim 1, wherein the generating, by the AI generative module, the corresponding atmosphere rendering mode for all the screens and lighting systems in the vehicle cabin according to the content recognition result comprises:
generating, by the AI generative module, a visual effect matching a theme of the viewing content according to the content analysis result, wherein the visual effect indicates the atmosphere rendering mode, and the visual effect comprises a color scheme, a dynamic pattern, and a transition effect;
configuring other screens in the vehicle cabin according to the visual effect to obtain display content of the other screens; and
controlling the lighting systems in the vehicle cabin according to the visual effect, and adjusting a color and a brightness of lights according to the color scheme.

4. The method according to claim 1, wherein the adjusting, by the AI sound effect control module, the sound effect of the sound system according to the movie type and the scene, wherein the sound effect is synchronized with the atmosphere rendering mode, comprises:
monitoring in real time a key scene change in a movie, and preliminarily adjusting the sound effect of the sound system according to the key scene change, wherein the key scene change comprises at least one of a combat change, a pursuit change, or a romantic change;
re-adjusting the sound effect of the sound system using a multi-channel surround sound technology, wherein the multi-channel surround sound technology is configured to simulate propagation of sound in a three-dimensional space to obtain a stereoscopic and realistic auditory experience; and
performing sound positioning and balance adjustment on the sound effect of the sound system according to a seat position of the user and acoustic characteristics of the vehicle cabin, wherein the sound positioning and balance adjustment are configured to ensure that each seat obtains an optimal auditory effect.

5. The method according to claim 1, wherein said collecting in real time, by the user feedback module, the feedback data of the user, and dynamically adjusting the atmosphere rendering mode according to the feedback data comprises:
monitoring physiological data of the user by a sensor, wherein the physiological data comprises heart rate, respiratory rate, and skin conductance, and the physiological data is configured to evaluate an emotional state and a stress level of the user;
capturing behavioral data of the user using a camera or a motion tracking technology, wherein the behavioral data comprises a head position, a body position, a posture change, and a gesture action of the user;
analyzing a micro-expression of the user using a facial expression recognition technology, wherein the micro-expression indicates a satisfaction degree and an emotional feedback of the user to a current atmosphere;
analyzing an intonation change in a voice command of the user using an integrated voice recognition system, wherein the intonation change indicates an intention and an emotion of the user; and
inputting the collected physiological data, behavioral data, micro-expression, and intonation change into an AI algorithm, analyzing in real time a viewing experience of the user using the AI algorithm, and dynamically adjusting the atmosphere rendering mode according to an analysis result of the viewing experience.

6. An artificial intelligence (AI)-based in-vehicle system for creating a viewing atmosphere in a vehicle cabin, comprising:
an AI content recognition and analysis module, configured to automatically analyze and recognize viewing content to obtain a content recognition result of the viewing content, wherein the content recognition result indicates a movie type, a scene, and an emotional tone of the viewing content;
an AI generative module, configured to generate a corresponding atmosphere rendering mode for all screens and lighting systems in the vehicle cabin according to the content recognition result, wherein the atmosphere rendering mode comprises one or more of light flashing simulation in a lightning and thunder scene, ambient lighting change in a horror scene, or soft lighting adjustment in a romantic scene;
an AI sound effect control module, configured to adjust a sound effect of a sound system according to the movie type and the scene, wherein the sound effect is synchronized with the atmosphere rendering mode; and
a user feedback module, configured to collect in real time feedback data of the user, and dynamically adjust the atmosphere rendering mode according to the feedback data.

7. The system according to claim 6, wherein the AI content recognition and analysis module is configured to:
receive viewing content information and video stream data input by the user, wherein the viewing content information comprises a movie name, a genre, a director, and an actor; and
perform, using a deep learning algorithm, an emotion analysis and an atmosphere analysis on the viewing content information and the video stream data to obtain a content analysis result, wherein the content analysis result comprises an emotion analysis result and an atmosphere analysis result, the emotion analysis being configured to recognize the emotional tone of the viewing content, and the atmosphere analysis being configured to recognize a theme of the viewing content and time frame data of key scenes in the viewing content.

8. The system according to claim 6, wherein the AI generative module is configured to:
generate, by the AI generative module, a visual effect matching a theme of the viewing content according to the content analysis result, wherein the visual effect indicates the atmosphere rendering mode, and the visual effect comprises a color scheme, a dynamic pattern, and a transition effect;
configure other screens in the vehicle cabin according to the visual effect to obtain display content of the other screens; and
control the lighting systems in the vehicle cabin according to the visual effect, and adjust a color and a brightness of lights according to the color scheme.

9. The system according to claim 6, wherein the AI sound effect control module is configured to:
monitor in real time a key scene change in a movie, and preliminarily adjust the sound effect of the sound system according to the key scene change, wherein the key scene change comprises at least one of a combat change, a pursuit change, or a romantic change;
re-adjust the sound effect of the sound system using a multi-channel surround sound technology, wherein the multi-channel surround sound technology is configured to simulate propagation of sound in a three-dimensional space to obtain a stereoscopic and realistic auditory experience; and
perform sound positioning and balance adjustment on the sound effect of the sound system according to a seat position of the user and acoustic characteristics of the vehicle cabin, wherein the sound positioning and balance adjustment are configured to ensure that each seat obtains an optimal auditory effect.

10. The system according to claim 6, wherein the user feedback module is configured to:
monitor physiological data of the user by a sensor, wherein the physiological data comprises heart rate, respiratory rate, and skin conductance, and the physiological data is configured to evaluate an emotional state and a stress level of the user;
capture behavioral data of the user using a camera or a motion tracking technology, wherein the behavioral data comprises a head position, a body position, a posture change, and a gesture action of the user;
analyze a micro-expression of the user using a facial expression recognition technology, wherein the micro-expression indicates a satisfaction degree and an emotional feedback of the user to a current atmosphere;
analyze an intonation change in a voice command of the user using an integrated voice recognition system, wherein the intonation change indicates an intention and an emotion of the user; and
input the collected physiological data, behavioral data, micro-expression, and intonation change into an AI algorithm, analyze in real time a viewing experience of the user using the AI algorithm, and dynamically adjust the atmosphere rendering mode according to an analysis result of the viewing experience.
